# EUROPEAN PATENT SPECIFICATION

(11) **EP 4 057 133 B1**
(45) Date of publication and mention of the grant of the patent: **17.07.2024**
(21) Application number: 22160141.2
(22) Date of filing: 04.03.2022
(51) Int. Cl.: G06F 8/00, G06F 8/60

(54) **COMPOSITION OF CLOSED LOOPS FROM CLOSED LOOP STAGES**
ZUSAMMENSETZUNG VON GESCHLOSSENEN SCHLEIFEN AUS GESCHLOSSENEN SCHLEIFENSTUFEN
COMPOSITION EN BOUCLES FERMÉES À PARTIR D'ÉTAGES EN BOUCLE FERMÉE

(30) Priority: 08.03.2021 EP 21161298
(43) Date of publication of application: 14.09.2022
(73) Proprietor: Nokia Technologies Oy, 02610 Espoo (FI)
(72) Inventor: MWANJE, Stephen, 84405 Dorfen (DE); ABDELKADER, Abdelrahman, 80333 Munich (DE)
(74) Representative: Nokia EPO representatives

(56) References cited:
- US-A1- 2020 036 723

## Description

### Field

Various example embodiments relate to composition of closed loops from closed loop stages. More specifically, various example embodiments exemplarily relate to measures (including methods, apparatuses and computer program products) for realizing composition of closed loops from closed loop stages.

### Background

The present specification generally relates to closed loop (CL) automation in Third Generation Partnership Project (3GPP) Fifth Generation (5G) (radio access) networks and other (future) generations of wireless/mobile networks.

A CL is a control theory concept that signifies the capabilities to 1) observe event(s) from an underlying process or system, 2) interpret and analyze the events to create insight, 3) select or recommend (an) action(s) in response to the observed events, 4) execute the actions onto the underlying system, and 5) receive feedback on the effect of the action(s) on the system. The loop may be executed once, terminating execution after receiving the feedback. It may however also be executed multiple times, which happens when the feedback comes as data on new events from the system to which the loop is supposed to respond. Relatedly, it may also be executed infinitely many times resulting in what is called an infinite loop.

The term "Closed Loop" is however also used to refer to the logical entity with the control capabilities as listed above. In network management, the entity is a closed loop management function (CL MnF) that interacts with the network (or the resources thereof) to capture the received data about network events and to act on the network by providing new configurations.

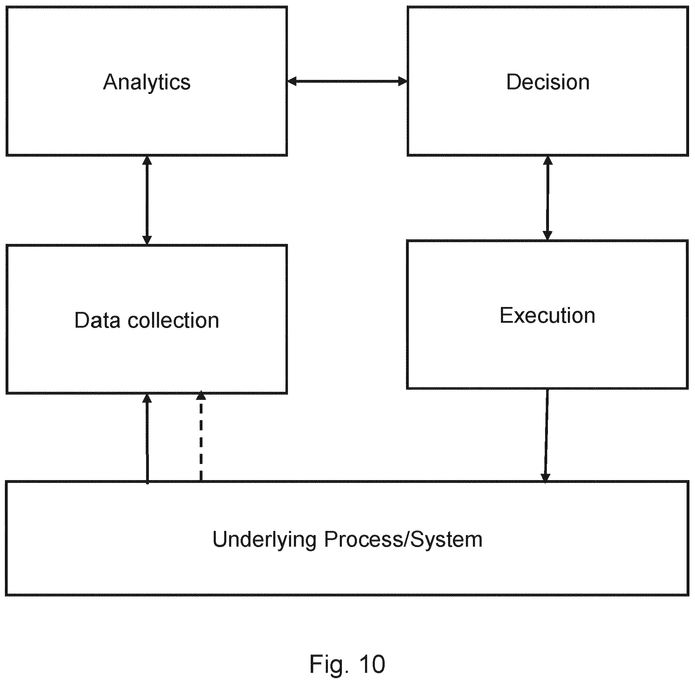

Figure 10 is a schematic diagram of a closed loop according to example embodiments, and in particular illustrates the CL concept as system implementing a sequence of four stages.

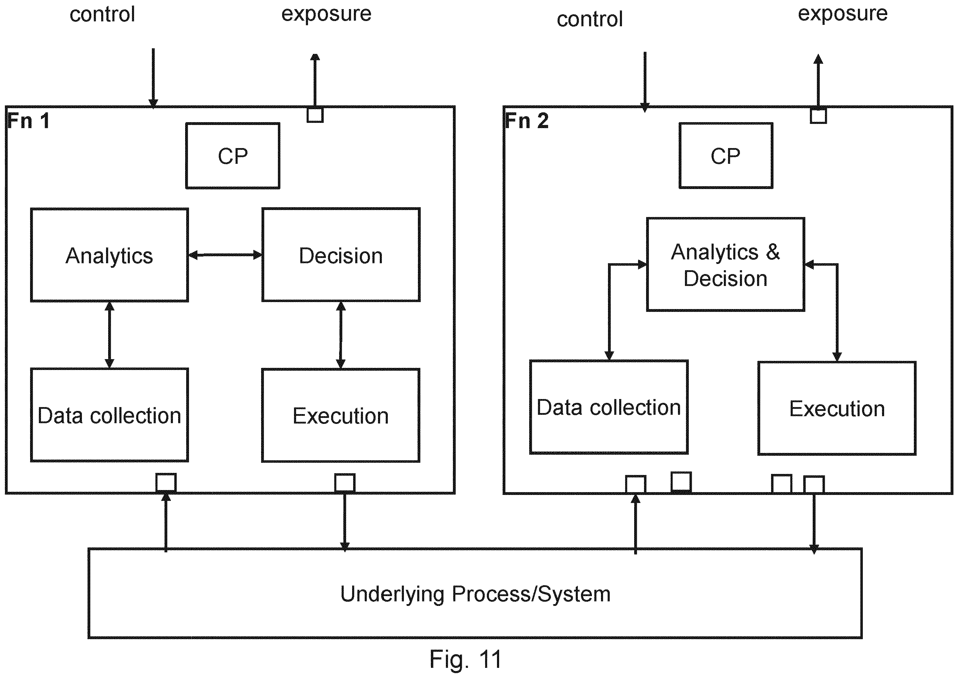

Specifically, as illustrated in Figure 10, four stages are chained to make the loop. The entity, however, may be implemented with fewer (or even more) stages as illustrated in Figure 11.

Figure 11 is a schematic diagram of closed loops according to example embodiments, and in particular illustrates aspects of a cognitive network management system.

Here, one closed loop management function is implemented from four stages (left hand side), while another closed loop management function is implemented from three stages (right hand side) by combining the analysis and decision stages into a single stage.

Each CL MnF may implement a Closed-loop Control Point (CP) as a separate functionality for managing or controlling the closed loop (MnF) to e.g., support interaction with the external world. Correspondingly, the CL MnF may provide a control interface through which external entities may control or manage the CL MnF, as well as an exposure interface through which the CL MnF exposes to the external environment information about its internal structure, configurations and operations.

Although each CL MnF is represented as a single entity that implements the interfaces to the network resource, this is not always the case. Today, CL MnFs are typically implemented in a single application that combines all the functionalities within the application. An example here is Nokia NetACT, which implements different tools. Examples of such tools include, for data collection the simple network management protocol (SNMP) mediation, for analysis the monitor, for decision making the performance manager, as well as execution tools for network configuration such as the configurator. With such implementations, multi-vendor interactions are only required for the interfaces to the network resources (as has been the case to date).

There is a push however for multi-vendor network automation environments. For example, Nokia EdenNet seeks to support third party applications by providing a software development kit (the edenNet SDK) through which the third-party vendors may develop modules that can be executed on EdenNet. This supports specific modules for accomplishing specific tasks, e.g. provide a specific analysis on some data. It however requires close integration, e.g. the third-party vendor co-developing the application using the provided software development kit (SDK). Yet, e.g. because of intellectual property concerns, the vendors may not be willing to open their developments by using a common development kit. Instead, a solution is required to support multi-vendor CLs that are integrated at runtime without need for shared development.

The question then is how the multi-vendor CLs would be integrated and deployed without the need for a shared developing kit relying on standardized application programming interfaces (API).

There has been discussion in standards groups for Whitebox deployments, where the closed loop stages are not pre-integrated by the respective vendor but where the CL can be created by combining stages from different vendors. For these, however, no mechanism has been provided for how this may be implemented.

Hence, the problem arises that an approach is needed, allowing the integration of a closed loop from different closed loop stages, in particular allowing the integration of different closed loop stages from different vendors. Hence, there is a need to provide for an improved composition of closed loops from closed loop stages.

US2020036723A1 provides methods that enable client devices to install integrations of a third party application that supports variable host address identification.

### Summary

Various embodiments aim at addressing at least part of the above issues and/or problems and drawbacks.

Various aspects of the embodiments are set out in the appended claims.

### Brief description of the drawings

In the following, the present disclosure will be described in greater detail by way of non-limiting examples with reference to the accompanying drawings, in which
Figure 1 is a block diagram illustrating an apparatus according to example embodiments,
Figure 2 is a block diagram illustrating an apparatus according to example embodiments,
Figure 3 is a block diagram illustrating an apparatus according to example embodiments,
Figure 4 is a block diagram illustrating an apparatus according to example embodiments,
Figure 5 is a block diagram illustrating an apparatus according to example embodiments,
Figure 6 is a block diagram illustrating an apparatus according to example embodiments,
Figure 7 is a schematic diagram of a procedure according to example embodiments,
Figure 8 is a schematic diagram of a procedure according to example embodiments,
Figure 9 is a schematic diagram of a procedure according to example embodiments,
Figure 10 is a schematic diagram of a closed loop according to example embodiments,
Figure 11 is a schematic diagram of closed loops according to example embodiments,
Figure 12 is a schematic diagram of a closed loop according to example embodiments,
Figure 13 is a schematic diagram of a closed loop according to example embodiments,
Figure 14 is a schematic unified modeling language diagram of a closed loop stage as defined according to example embodiments,
Figure 15 shows a schematic diagram of signaling sequences according to example embodiments, and
Figure 16 is a block diagram alternatively illustrating apparatuses according to example embodiments.

### Detailed description

The present disclosure is described herein with reference to particular non-limiting examples and to what are presently considered to be conceivable embodiments. A person skilled in the art will appreciate that the disclosure is by no means limited to these examples, and may be more broadly applied.

It is to be noted that the following description of the present disclosure and its embodiments mainly refers to specifications being used as non-limiting examples for certain exemplary network configurations and deployments. Namely, the present disclosure and its embodiments are mainly described in relation to 3GPP specifications being used as non-limiting examples for certain exemplary network configurations and deployments. As such, the description of example embodiments given herein specifically refers to terminology which is directly related thereto. Such terminology is only used in the context of the presented non-limiting examples, and does naturally not limit the disclosure in any way. Rather, any other communication or communication related system deployment, etc. may also be utilized as long as compliant with the features described herein.

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to example embodiments, in general terms, there are provided measures and mechanisms for (enabling/realizing) composition of closed loops from closed loop stages.

In particular, according to example embodiments, a standards-based multi-vendor approach is provided that leverages the 3GPP SA5 API to support the integration of a closed loop from different closed loop stages.

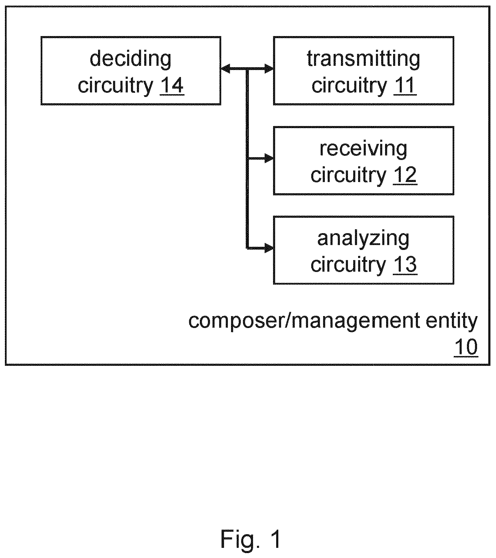

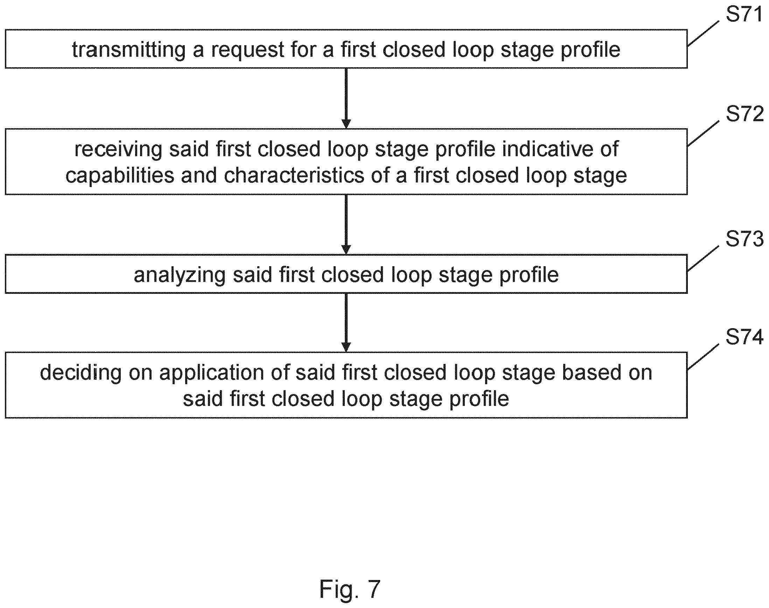

Figure 1 is a block diagram illustrating an apparatus according to example embodiments. The apparatus may be a network node or entity 10 implementing a composer/management entity (composing a closed loop from a plurality of closed loop stages) comprising a transmitting circuitry 11, a receiving circuitry 12, an analyzing circuitry 13, and a deciding circuitry 14. The transmitting circuitry 11 transmits a request for a first closed loop stage profile. The receiving circuitry 12 receives said first closed loop stage profile indicative of capabilities and characteristics of a first closed loop stage. The analyzing circuitry 13 analyzes said first closed loop stage profile. The deciding circuitry 14 decides on application of said first closed loop stage based on said first closed loop stage profile. Figure 7 is a schematic diagram of a procedure according to example embodiments. The apparatus according to Figure 1 may perform the method of Figure 7 but is not limited to this method. The method of Figure 7 may be performed by the apparatus of Figure 1 but is not limited to being performed by this apparatus.

As shown in Figure 7, a procedure according to example embodiments comprises an operation of transmitting (S71) a request for a first closed loop stage profile, an operation of receiving (S72) said first closed loop stage profile indicative of capabilities and characteristics of a first closed loop stage, an operation of analyzing (S73) said first closed loop stage profile, and an operation of deciding (S74) on application of said first closed loop stage based on said first closed loop stage profile.

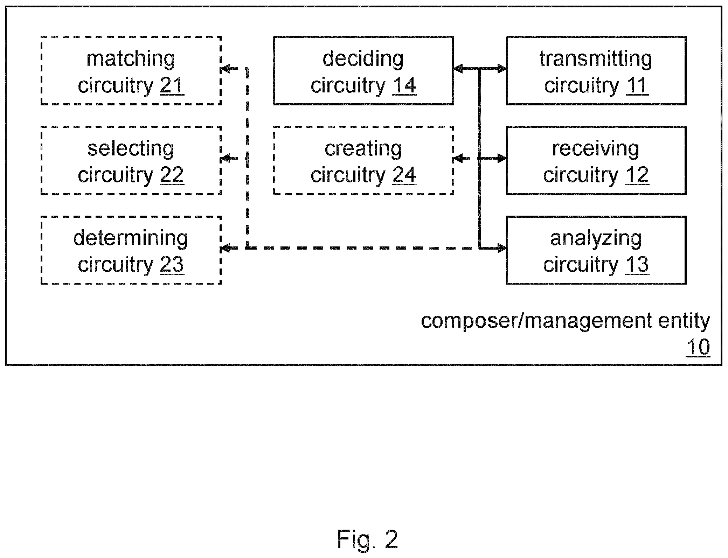

Figure 2 is a block diagram illustrating an apparatus according to example embodiments. In particular, Figure 2 illustrates a variation of the apparatus shown in Figure 1. The apparatus according to Figure 2 may thus further comprise a matching circuitry 21, a selecting circuitry 22, a determining circuitry 23, and/or a creating circuitry 24.

In an embodiment at least some of the functionalities of the apparatus shown in Figure 1 (or 2) may be shared between two physically separate devices forming one operational entity. Therefore, the apparatus may be seen to depict the operational entity comprising one or more physically separate devices for executing at least some of the described processes.

According to further example embodiments, said first closed loop stage profile includes information on a type and/or capabilities of said first closed loop stage, information on an input interface of said first closed loop stage, and information on an output interface of said first closed loop stage.

According to a variation of the procedure shown in Figure 7, exemplary details of the deciding operation (S74) (deciding on application of said first closed loop stage) are given, which are inherently independent from each other as such. Such exemplary deciding operation (S74) according to example embodiments may comprise an operation of matching said first closed loop stage profile with requirements in relation to said closed loop.

According to a variation of the procedure shown in Figure 7, exemplary details of the deciding operation (S74) (deciding on application of said first closed loop stage) are given, which are inherently independent from each other as such. Such exemplary deciding operation (S74) according to example embodiments may comprise an operation of selecting said first closed loop stage for a first function in said closed loop, if said first closed loop stage profile matches with said requirements in relation to said first function in said closed loop.

According to further example embodiments, said request for said first closed loop stage profile includes first closed loop stage filter information and is transmitted towards an automation platform entity, and said first closed loop stage profile is received from said automation platform entity.

According to a variation of the procedure shown in Figure 7, exemplary additional operations are given, which are inherently independent from each other as such. According to such variation, an exemplary method according to example embodiments may comprise an operation of transmitting a request for a second closed loop stage profile, an operation of receiving said second closed loop stage profile indicative of capabilities and characteristics of a second closed loop stage, an operation of analyzing said second closed loop stage profile, and an operation of deciding on application of said second closed loop stage based on said second closed loop stage profile.

According to further example embodiments, said second closed loop stage profile includes information on a type and/or capabilities of said second closed loop stage, information on an input interface of said second closed loop stage, and information on an output interface of said second closed loop stage.

According to a variation of the procedure shown in Figure 7, exemplary details of the deciding operation (deciding on application of said second closed loop stage) are given, which are inherently independent from each other as such. Such exemplary deciding operation according to example embodiments may comprise an operation of matching said second closed loop stage profile with requirements in relation to said closed loop.

According to a variation of the procedure shown in Figure 7, exemplary details of the deciding operation (deciding on application of said second closed loop stage) are given, which are inherently independent from each other as such. Such exemplary deciding operation according to example embodiments may comprise an operation of selecting said second closed loop stage for a second function in said closed loop, if said second closed loop stage profile matches with said requirements in relation to said second function in said closed loop.

According to further example embodiments, said request for said second closed loop stage profile includes second closed loop stage filter information and is transmitted towards an automation platform entity, and said second closed loop stage profile is received from said automation platform entity.

According to a variation of the procedure shown in Figure 7, exemplary additional operations are given, which are inherently independent from each other as such. According to such variation, an exemplary method according to example embodiments may comprise an operation of determining, for said closed loop, a set of closed loop stages including said first closed loop stage and said second closed loop stage.

According to a variation of the procedure shown in Figure 7, exemplary additional operations are given, which are inherently independent from each other as such. According to such variation, an exemplary method according to example embodiments may comprise an operation of creating a configuration for each of said closed loop stages of said set of closed loop stages based on said requirements in relation to said closed loop.

According to a variation of the procedure shown in Figure 7, exemplary additional operations are given, which are inherently independent from each other as such. According to such variation, an exemplary method according to example embodiments may comprise an operation of transmitting, to each of said closed loop stages of said set of closed loop stages, said respective configuration.

According to a variation of the procedure shown in Figure 7, exemplary additional operations are given, which are inherently independent from each other as such. According to such variation, an exemplary method according to example embodiments may comprise an operation of transmitting an automation platform configuration with respect to each of said closed loop stages of said set of closed loop stages towards an automation platform entity.

According to further example embodiments, said first closed loop stage is one of a data collection entity, an analysis entity, a decision entity, and an execution entity, or any combination of said data collection entity, said analysis entity, said decision entity, and said execution entity. Alternatively, or in addition, according to further example embodiments, said second closed loop stage is one of a data collection entity, an analysis entity, a decision entity, and an execution entity, or any combination of said data collection entity, said analysis entity, said decision entity, and said execution entity.

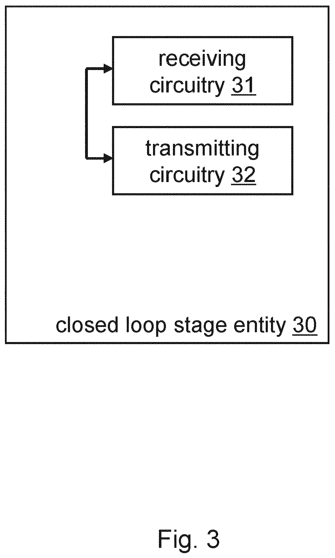

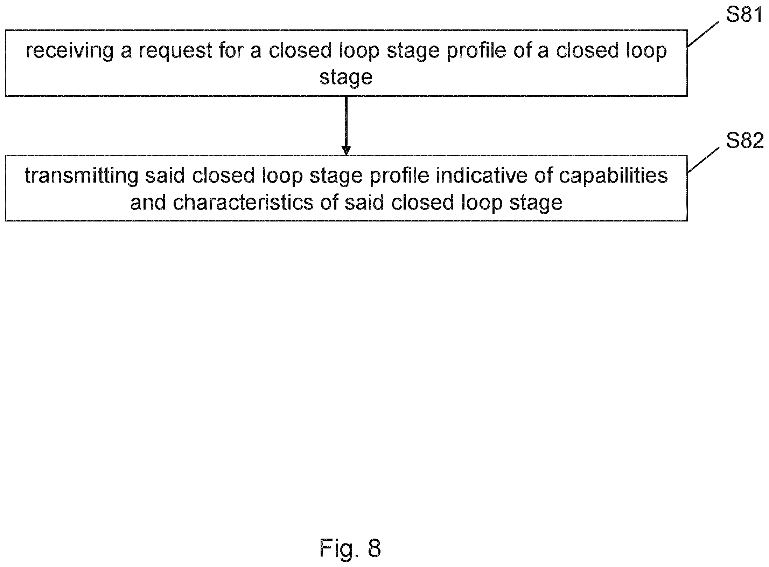

Figure 3 is a block diagram illustrating an apparatus according to example embodiments. The apparatus may be a network node or entity 30 implementing a closed loop stage entity comprising a receiving circuitry 31 and a transmitting circuitry 32. The receiving circuitry 31 receives a request for a closed loop stage profile of said closed loop stage. The transmitting circuitry 32 transmits said closed loop stage profile indicative of capabilities and characteristics of said closed loop stage. Figure 8 is a schematic diagram of a procedure according to example embodiments. The apparatus according to Figure 3 may perform the method of Figure 8 but is not limited to this method. The method of Figure 8 may be performed by the apparatus of Figure 3 but is not limited to being performed by this apparatus.

As shown in Figure 8, a procedure according to example embodiments comprises an operation of receiving (S81) a request for a closed loop stage profile of said closed loop stage, and an operation of transmitting (S82) said closed loop stage profile indicative of capabilities and characteristics of said closed loop stage.

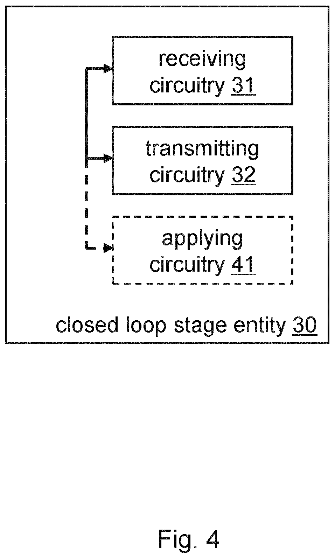

Figure 4 is a block diagram illustrating an apparatus according to example embodiments. In particular, Figure 4 illustrates a variation of the apparatus shown in Figure 3. The apparatus according to Figure 4 may thus further comprise an applying circuitry 41.

In an embodiment at least some of the functionalities of the apparatus shown in Figure 3 (or 4) may be shared between two physically separate devices forming one operational entity. Therefore, the apparatus may be seen to depict the operational entity comprising one or more physically separate devices for executing at least some of the described processes.

According to further example embodiments, said closed loop stage profile includes information on a type and/or capabilities of said closed loop stage, information on an input interface of said closed loop stage, and information on an output interface of said closed loop stage.

According to a variation of the procedure shown in Figure 8, exemplary additional operations are given, which are inherently independent from each other as such. According to such variation, an exemplary method according to example embodiments may comprise an operation of receiving a configuration for said closed loop stage entity, and an operation of applying said configuration.

According to further example embodiments, said closed loop stage entity is one of a data collection entity, an analysis entity, a decision entity, and an execution entity, or any combination of said data collection entity, said analysis entity, said decision entity, and said execution entity.

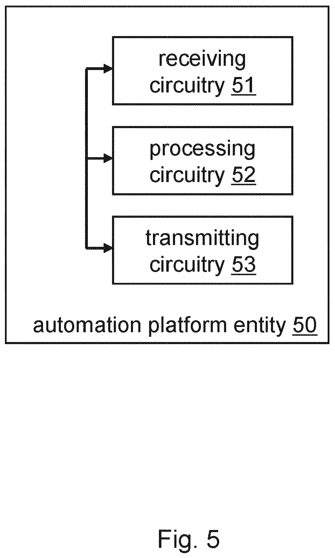

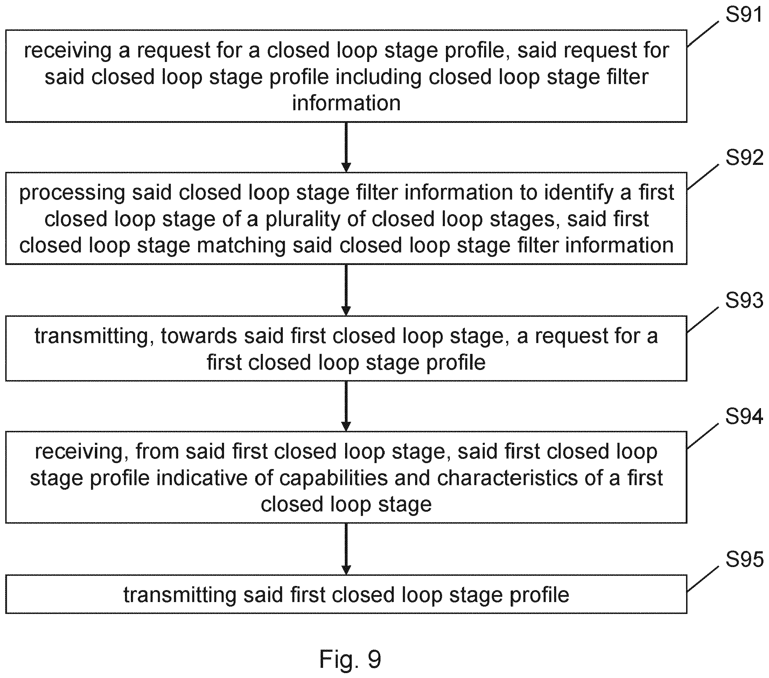

Figure 5 is a block diagram illustrating an apparatus according to example embodiments. The apparatus may be a network node or entity 50 implementing an automation platform entity (hosting a plurality of closed loop stages) comprising a receiving circuitry 51, a processing circuitry 52, and a transmitting circuitry 53. The receiving circuitry 51 receives a request for a closed loop stage profile, said request for said closed loop stage profile including closed loop stage filter information. The processing circuitry 52 processes said closed loop stage filter information to identify a first closed loop stage of said plurality of closed loop stages, said first closed loop stage matching said closed loop stage filter information. The transmitting circuitry 53 transmits, towards said first closed loop stage, a request for a first closed loop stage profile. The receiving circuitry 51 (or an additional receiving circuitry) receives, from said first closed loop stage, said first closed loop stage profile indicative of capabilities and characteristics of a first closed loop stage. The transmitting circuitry 53 (or an additional transmitting circuitry) transmits said first closed loop stage profile. Figure 9 is a schematic diagram of a procedure according to example embodiments. The apparatus according to Figure 5 may perform the method of Figure 9 but is not limited to this method. The method of Figure 9 may be performed by the apparatus of Figure 5 but is not limited to being performed by this apparatus.

As shown in Figure 9, a procedure according to example embodiments comprises an operation of receiving (S91) a request for a closed loop stage profile, said request for said closed loop stage profile including closed loop stage filter information, an operation of processing (S92) said closed loop stage filter information to identify a first closed loop stage of said plurality of closed loop stages, said first closed loop stage matching said closed loop stage filter information, an operation of transmitting (S93), towards said first closed loop stage, a request for a first closed loop stage profile, an operation of receiving (S94), from said first closed loop stage, said first closed loop stage profile indicative of capabilities and characteristics of a first closed loop stage, and an operation of transmitting (S95) said first closed loop stage profile.

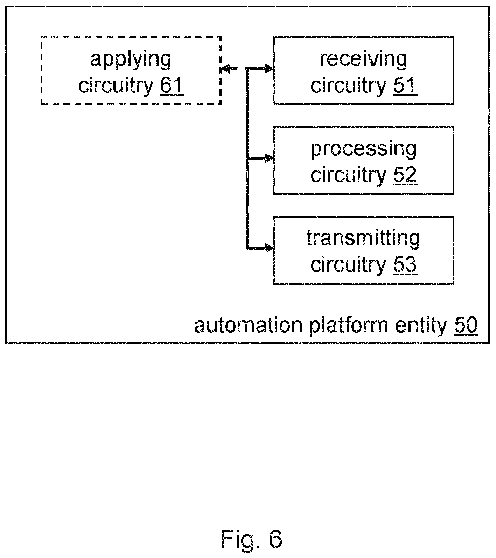

Figure 6 is a block diagram illustrating an apparatus according to example embodiments. In particular, Figure 6 illustrates a variation of the apparatus shown in Figure 5. The apparatus according to Figure 6 may thus further comprise an applying circuitry 61.

In an embodiment at least some of the functionalities of the apparatus shown in Figure 5 (or 6) may be shared between two physically separate devices forming one operational entity. Therefore, the apparatus may be seen to depict the operational entity comprising one or more physically separate devices for executing at least some of the described processes.

According to further example embodiments, said first closed loop stage profile includes information on a type and/or capabilities of said first closed loop stage, information on an input interface of said first closed loop stage, and information on an output interface of said first closed loop stage.

According to a variation of the procedure shown in Figure 9, exemplary additional operations are given, which are inherently independent from each other as such. According to such variation, an exemplary method according to example embodiments may comprise an operation of receiving an automation platform configuration with respect to said first closed loop stage entity, and an operation of applying an operation action to said first closed loop stage entity based on said automation platform configuration.

According to further example embodiments, said first closed loop stage entity is one of a data collection entity, an analysis entity, a decision entity, and an execution entity, or any combination of said data collection entity, said analysis entity, said decision entity, and said execution entity.

Example embodiments are explained below in more specific terms.

According to example embodiments, an approach for composing a closed loop from multi-vendor closed loop stages is provided. It is, however, noted that according to example embodiments the considered closed loop stages do not necessary have to be from different vendors. Instead, some closed loop stages of a resulting closed loop or all closed loop stages of the resulting closed loop may be from the same vendor. That is, when in the present specification the terms multi-vendor closed loop or multi-vendor closed loop stages are used, these are to be understood as including single-vendor closed loops and single-vendor closed loop stages.

According to example embodiments, a design of the information model for the CL stage and the implementation of interfaces and operations needed to implement a multi-vendor closed loop is proposed.

Moreover, the according to example embodiments, a CL stage profile is provided as the description information for the CL stage that enables an entity to read the stage and instantiate it for use in the integration of the multi-vendor CL.

In detail, according to example embodiments, a CLStage information model is defined, which highlights the input and output attributes of the CL stage as well as the functionalities and attributes required to support multi-vendor CL integration.

According thereto, each stage is defined by a unique name, stage profile, inputs and outputs as shown in Table 1 below. Further, according thereto, each stage performs a specific list of logical operations and requires inputs of a specific type as well as produces outputs of a specific type.

Further, according to example embodiments, a CLStageProfile is defined, which describes the capabilities and characteristics of the CL stage in a way that enables the capable entity to read these characteristics to identify the types of inputs and outputs required by the stage.

According thereto, an entity that integrates the CL stage into a CL MnF, searches the profiles of available stages and identifies the ones that provide at their outputs the same attributes as those needed as inputs for the CL stage. Based on the observed inputs and outputs for the different stages, the integrating entity matches the stages and configures the interfaces on the different stages to exchange information to close the loop

Further, according to example embodiments, interfaces of CL stages are defined.

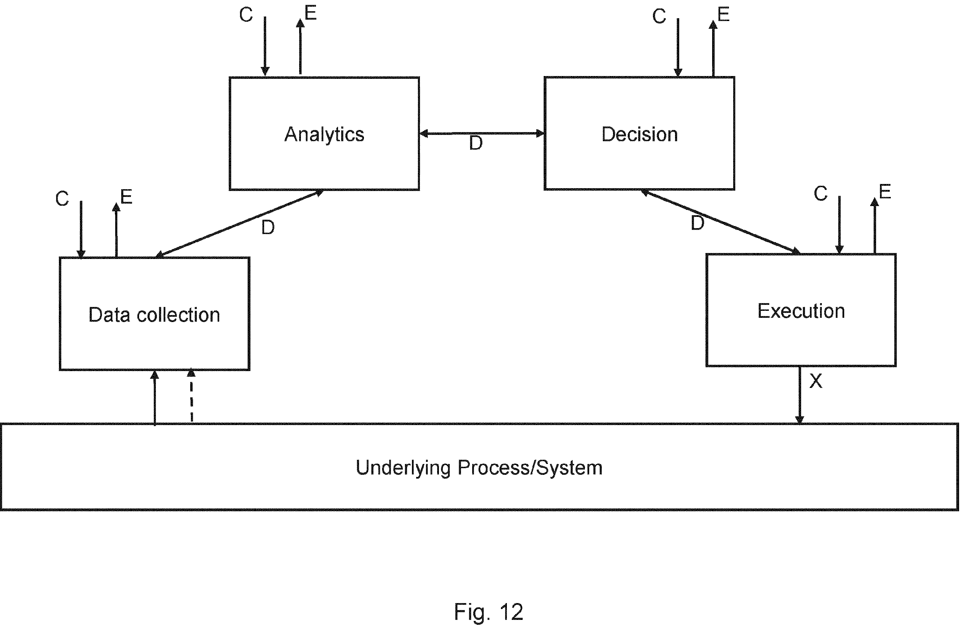

Figure 12 is a schematic diagram of a closed loop according to example embodiments, and in particular illustrates an example of a manually integrated and managed multi-vendor closed loop.

As illustrated in Figure 12, according to example embodiments, each stage implements four interfaces.
- A stage control interface (labelled C) enables an external entity to control the individual stage e.g. to configure the stage according to the required capabilities to be integrated to create a CL MnF. It also enables the stage to be managed during operations.
- A stage exposure interface (labelled E) provides information to external entities about the stage.
- A data ingress interface provides data to the stage. For the first stage, this interface is the same as the data collection interface for the entire CL MnF. For the other stages, this interface is a data consumer interface (labelled D) through which the previous stage provides data.
- A data transfer interface enables stages to transfer data to their subsequent stages. This is in effect the same as the data ingress interface (labelled D) but as seen from the producer of the data as opposed to the view of the data consumer which is the data ingress interface. For the final stage, however, this interface is the same as the execution interface of the CL MnF (labelled X).

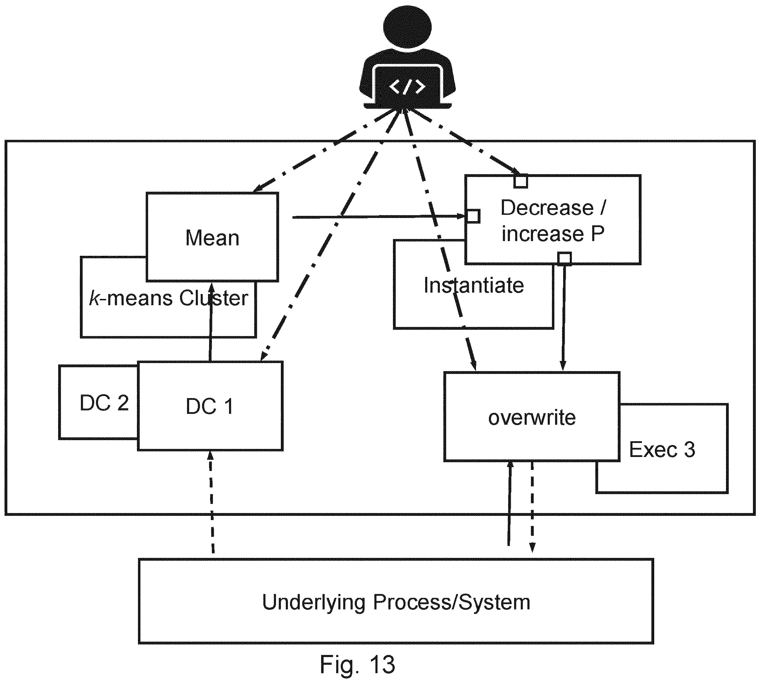

Figure 13 is a schematic diagram of a closed loop according to example embodiments, and in particular illustrates an example of a manually integrated and managed multi-vendor closed loop.

The multi-vendor closed loop is integrated and deployed by the operator, requiring the control and exposure interfaces to be exposed to the operator, which are highlighted in figure 13 by thick dotted and dashed arrows.

According to example embodiments, each stage also implements the runtime interfaces (labelled D in Figure 12) through which the stages exchange data to accomplish the network management tasks. Since the stages may be from different vendors, both types of interfaces must be implemented using standardized APIs as specified below.

According to example embodiments, the operator identifies applications that may accomplish the requirements of the different stages, and then configures the stages to trigger their activities and to transfer data to each other.

According to example embodiments, the data collection (DC) stage may be configured to deliver data to the analytics stage. Alternatively, the analytics stage may be configured to collect data from the DC stage whenever such data is needed to compute some analytics.

According to example embodiments, the analytics stage may be configured to deliver data to the decision stage. Alternatively, the decision stage may be configured to collect data in the form of an analytics report from the analytics stage whenever such data is needed to derive a decision.

According to example embodiments, the decision stage may be configured to deliver data in form of its recommended actions to the execution stage. Alternatively, the execution stage may be configured to collect data in form of a set of recommended actions from the decision stage whenever such recommendations are needed.

According to example embodiments, the Execution stage is configured to implement the recommended actions on to the network.

Example embodiments are specified below in more detail.

In particular, according to example embodiments, the CL stage is described.

For the operator the compose the loop, it is necessary to have a full description of the closed loop stages that then enables online identification of the capabilities of the different stages. Hence, according to example embodiments, the following information model for the CL stage is provided.

### Information model definition for GenericCLStage

The GenericCLStage must be modelled in a way that characterizes its capabilities that would then enable the operator to compose different stages into a closed loop.

The GenericCLStage information object class (IOC) according to example embodiments represents the properties of an abstract GenericCLStage.

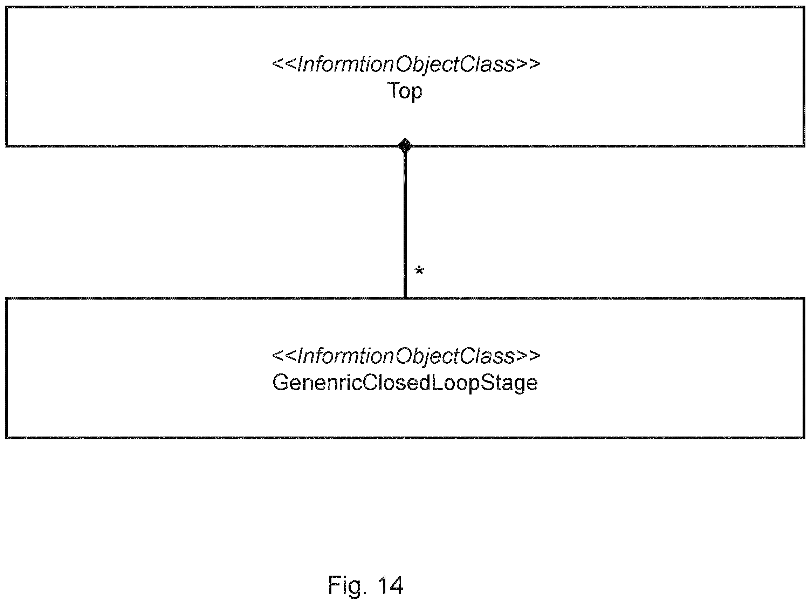

Figure 14 is a schematic unified modeling language (UML) diagram of a closed loop stage as defined according to example embodiments, and in particular illustrates the UML diagram for the GenericCLStage.

As is derivable from Figure 14, the GenericCLStage inherits from the IOC top level.

That is, the GenericCLStage includes attributes inherited from TOP IOC (defined in TS 28.622) and, according to example embodiments, at least the attributes in Table 1 below.

**Table 1: Attributes for the GenericCLStage**

| Attribute Name | Support Qualifier | is Readable | is Writable | is Invariant | is Notifyable |
|---|---|---|---|---|---|
| CLStageName | M | T | F | T | T |
| CLStageProfile | O | T | F | F | T |
| CLStageInput | M | T | F | F | T |
| CLStageOutput | M | T | F | F | T |
| CLStageState | M | T | F | F | T |

According to example embodiments, the attributes mentioned in Table 1 above are defined as in Table 2 below.

**Table 2: Definition of Attributes for the GenericCLStage**

| Attribute Name | Documentation and Allowed Values | Properties |
|---|---|---|
| CLStageName | A user-friendly (and user assignable) name of the CL stage. | type: String |
| | | multiplicity: 1 |
| | | isOrdered: False |
| | | isUnique: False |
| | | defaultValue: None |
| | | isNullable: False |
| | allowedValues: Not Applicable | |
| CLStageProfile | It describes the task aspect of the intent that shall be accomplished. | type: String |
| | | multiplicity: 1 |
| | | isOrdered: False |
| | | isUnique: False |
| | | defaultValue: None |
| | | isNullable: False |
| | allowedValues: Not Applicable | |
| CLStageInputs | It describes the inputs to the CLStage, as an array for which each entry is one input | type: Object |
| | | multiplicity: 1 |
| | | isOrdered: False |
| | | isUnique: False |
| | | defaultValue: None |
| | | isNullable: False |
| | allowedValues: Not Applicable | |
| CLStageOutputs | It describes the outputs of the CLStage, as an array for which each entry is one output | type: Object |
| | | multiplicity: 1 |
| | | isOrdered: False |
| | | isUnique: False |
| | | defaultValue: None |
| | | isNullable: False |
| | allowedValues: Not Applicable | |
| CLStageState | It describes the administrative state of the CL stage. | type: ENUM |
| | | multiplicity: 1 |
| | | isOrdered: F |
| | allowedValues: "Active", "Inactive", | isUnique: F |
| | | defaultValue: None |
| | | isNullable: False |

### Information model definition for CLStageProfile

For composition of the closed loop, the operator needs to be able to read the CLStageProfile in order to understand the capabilities of the CL stage and how it may be combined with other CL stages. Hence, according to example embodiments, the following information model for the CLStageProfile is provided. According to example embodiments, the entries in the CLStageProfile include the attributes in Table 3 below, whose definition are given in Table 4 below.

**Table 3: Attributes for the CLStageProfile**

| Attribute Name | Support Qualifier | is Readable | is Writable | is Invariant | is Notifyable |
|---|---|---|---|---|---|
| CLStageProfileName | M | T | F | T | T |
| CLStageDescription | O | T | F | T | T |
| CLStageType | M | T | F | T | T |
| CLStage-Operations | O | T | F | T | T |
| CLStageInput-Description | O | T | F | T | T |
| CLStageOutput-Description | O | T | F | T | T |

**Table 4: Definition of Attributes for the CLStageProfile**

| Attribute Name | Documentation and Allowed Values | Properties |
|---|---|---|
| CLStageProfileName | A user-friendly name of the CL Stage profile. | type: String |
| | | multiplicity: 1 |
| | | isOrdered: False |
| | | isUnique: False |
| | | defaultValue: None |
| | | isNullable: False |
| | allowedValues: Not Applicable | |
| CLStageDescription | High-level description of the general capabilities of the CL stage and what the stage can deliver. | type: String |
| | | multiplicity: 1 |
| | | isOrdered: False |
| | | isUnique: False |
| | | defaultValue: None |
| | | isNullable: True |
| | allowedValues: Not Applicable | |
| CL StageType | It describes the type of the logic performed in the stage as part of the CL. | type: ENUM |
| | | multiplicity: 1 |
| | | isOrdered: F |
| | | isUnique: F |
| | | defaultValue: None |
| | | isNullable: False |
| | allowedVlaues: "Data collection", "Analysis", "Decision", "Execution" | |
| CL StageOperation | It lists the logical operations done in the stage as an array for which each entry is one operation. E.g. (Optimization, mean, classification, etc.) | type: Object |
| | | multiplicity: 1 |
| | | isOrdered: False |
| | | isUnique: False |
| | | defaultValue: None |
| | | isNullable: False |
| | AllowedValues: Not Applicable | |
| CLStageInputDescription | It describes the inputs to the CLStage, as an array for which each entry is a description of one input | type: Object |
| | | multiplicity: 1 |
| | | isOrdered: False |
| | | isUnique: False |
| | | defaultValue: None |
| | | isNullable: False |
| | allowedValues: Not Applicable | |
| CLStageOutputDescription | It describes the outputs from the CLStage, as an array for which each entry is a description of one input | type: Object |
| | | multiplicity: 1 |
| | | isOrdered: False |
| | | isUnique: False |
| | | defaultValue: None |
| | | isNullable: True |

The CLStageInputs and CLStageOutputs attributes of the CLStageProfile are arrays whose entries are objects that describe the details about the parameters that are input into the stage or output by the stage. According to example embodiments, each entry of such an array may each have the structure described by in Table 5 below.

**Table 5: Attribute of the CLStageInputs and CLStageOutputs objects**

| Attribute Name | Documentation and Allowed Values | Properties |
|---|---|---|
| ParameterName | A user-friendly name of the Parameter. | type: String |
| | | multiplicity: 1 |
| | | isOrdered: False |
| | | isUnique: False |
| | | defaultValue: None |
| | allowedValues: Not Applicable | isNullable: False |
| ParameterGranularity | It describes the granularity of the values that are required or output for this parameter. For example, the stage may require as input the hourly measurements of a KPI, in which case the ParameterGranularity shall be 1 hour | |
| ValueLength | It describes the number of values of the said parameter that are provided as input or output. For example, the stage may require as input the hourly measurements of a KPI over a 24 hour period, in which case the ValueLength will be 24 | type: Numerical |
| | | multiplicity: 1 |
| | | isOrdered: False |
| | | isUnique: False |
| | | defaultValue: None |
| | | isNullable: True |
| | allowedValues: Not Applicable | |

Further, according to example embodiments, a CL composition procedure is described.

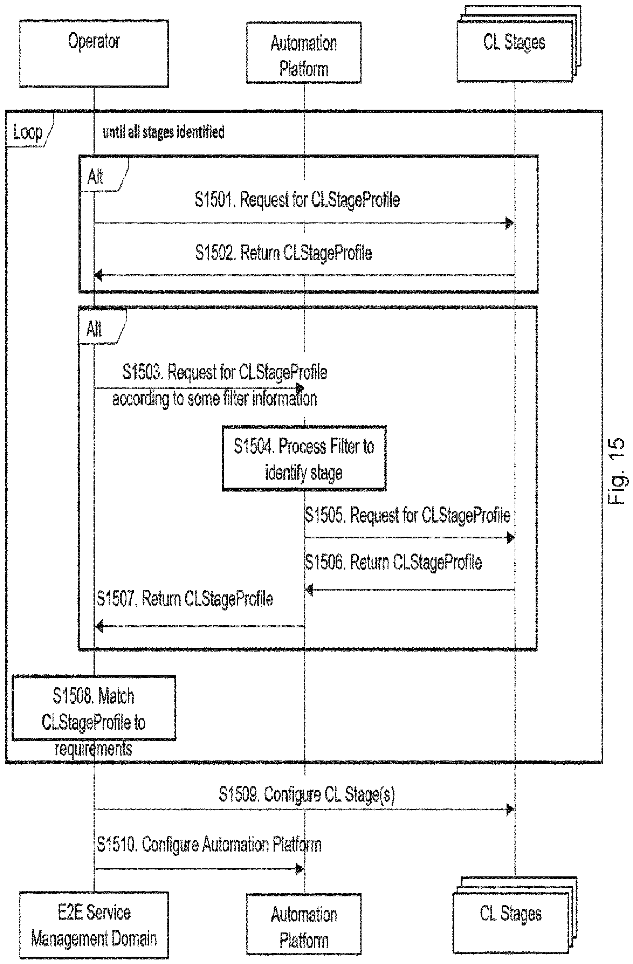

Figure 15 shows a schematic diagram of signaling sequences according to example embodiments, and in particular illustrates an example of composing a closed loop from multiple multi-vendor CL stages.

In detail, according to example embodiments, a process of composing the CL may include the following steps.

In a step S1501, the composing entity, e.g. the operator, requests an instantiated CLStage for its profile.

In a step S1502, the CLStage returns a profile to the operator.

According to an alternative, in a step S1503, the request may be sent to the automation platform that hosts multiple CLStages, in which case the automation platform may need to filter (step S1504) the request to identify the right CLStage from which to read (step S1505) the profile. The automation platform then gets (step S1506) the profile from the appropriate CLStage and forward (step S1507) that profile to the operator.

In a step S1508, on receiving the profile, the operator identifies the capabilities of the CLStage and matches them to the management requirements that need to be supported.

It is noted that steps S1501, S1502, and S1508 (alternatively steps S1504, S1505, S1506, S1507, and S1508) need to be undertaken multiple times to identify the different stages needed to compose a CL. However, the steps S1501, S1502, and S1508 (alternatively steps S1504, S1505, S1506, S1507, and S1508) may also be executed multiple times to identify the right CLStage for a given requirement.

In a step S1509, when the right set of CLStages is identified, the operator may configure the CLStages, e.g. to link their input-output interfaces and to activate them to start operations.

In a step S1510, the operator may also configure the automation platform, e.g., to instantiate a CL object and to mark the CL as active.

Further, according to example embodiments, interface implementations are described.

### Data Collection Stage

According to example embodiments, the data collection stage is configured to collect the data needed for the specific use case addressed by the CL MnF. According to example embodiments, the respective interfaces are implemented as in Table 6 below.

**Table 6: Interfaces of the data collection stage**

| Interface | Capability | Applicable API | Producer | Consumer |
|---|---|---|---|---|
| Control interface | Configure data collection characteristics | Generic Provisioning Management service | DC stage | operator-configures the data collection attributes |
| | Configure the stage with a Performance Management (PM) job to deliver PM data to the operator through the E interface | Generic Provisioning Management service | DC stage | Operator - configures the PM job on the DC stage |
| | Configure the stage with a data collection job to deliver data to the analytics stage through the D interface (data transfer) | Generic Provisioning Management service | DC stage | operator - configures the data collection job on the DC stage |
| Exposure interface | Provide information to the operator about the performance of data collection jobs | - file data reporting; or | DC stage | operator |
| | | - Streaming data reporting | | |
| data collection | The stage configures a data collection job to get data from the network | Generic Provisioning Management service | Network (or resource thereof) | DC stage - configures the data collection job from the network |
| | Collect data | - file data reporting; or | Network (or resource thereof) | DC stage |
| | | - Streaming data reporting | | |
| data transfer interface | Data delivery | - file data reporting; or | DC stage | Analytics stage |
| | | - Streaming data reporting | | |

### Analytics

According to example embodiments, the analytics stage is configured to either receive or to collect the data needed for the specific use case from the data collection stage, and to deliver its analytics to the decision stage. According to example embodiments, the respective interfaces are implemented as in Table 7 below.

**Table 7: Interfaces of the analytics stage**

| Interface | Capability | Applicable API | Producer | Consumer |
|---|---|---|---|---|
| Control interface | Configure behavior characteristics of the analytics | Generic Provisioning Management service | Analytics stage | operator-configures the Analytics attributes |
| | Configure the stage with a Performance Management (PM) job to deliver PM data to the operator through the E interface | Generic Provisioning Management service | Analytics stage | Operator - configures the PM job on the Analytics stage |
| | Configure the stage with a data collection job to deliver analytics to the decision stage through the D interface (data transfer) | Generic Provisioning Management service | Analytics stage | operator - configures the data collection job on the Analytics stage |
| Exposure interface | Provide information to the operator about the performance of the analytics jobs | - file data reporting; or | Analytics stage | operator |
| | | - Streaming data reporting | | |
| data collection | The stage configures a data collection job on the DC stage to get data from the data collection stage | Generic Provisioning Management service | DC stage | Analytics stage - configures the data collection job from the network |
| | Receive data | - file data reporting; or | DC stage | Analytics stage - |
| | | - Streaming data reporting | | |
| data transfer interface | Delivery analytics report to the decision stage | - file data reporting; or | Analytics stage | decision stage |
| | | - Streaming data reporting | | |

### Decision

According to example embodiments, the decision stage is configured to either receive or to collect the analytics needed for the specific use case from the analytics stage, and to deliver its decision to the execution stage. According to example embodiments, the respective interfaces may be implemented as in Table 8 below.

**Table 8: Interfaces of the decision stage**

| Interface | Capability | Applicable API | Producer | Consumer |
|---|---|---|---|---|
| Control interface | Configure behavior characteristics of the decision making | Generic Provisioning Management service | decision stage | operator-configures the decision attributes |
| | Configure the stage with a Performance Management (PM) job to deliver PM data to the operator through the E interface | Generic Provisioning Management service | decision stage | Operator - configures the PM job on the decision stage |
| | Configure the stage with a data collection job to deliver recommended actions to the Execution stage through the D interface (data transfer) | Generic Provisioning Management service | decision stage | operator - configures the data collection job on the decision stage |
| Exposure interface | Provide information to the operator about the performance of the decision jobs | - file data reporting; or | decision stage | operator |
| | | - Streaming data reporting | | |
| data collection | The stage configures a data collection job on the analytics stage to get the analytics report from the analytics stage | Generic Provisioning Management service | analytics stage | decision stage |
| | | | | - configures the data collection job on the analytics stage |
| | Receive analytics report | - file data reporting; or | analytics stage | decision stage - |
| | | - Streaming data reporting | | |
| data transfer interface | Delivery decision or recommended actions to the Execution stage | - file data reporting; or | decision stage | Execution stage |
| | | - Streaming data reporting | | |
| | | Generic Provisioning Management service | Execution stage | decision stage |
| | | | | - configures the Execution stage with the recommended actions |

### Execution

According to example embodiments, the execution stage is configured to either receive or to collect the recommended actions for the use case from the decision stage, and to implement the actions onto the network resources. According to example embodiments, the respective interfaces are implemented as in Table 9 below.

**Table 9: Interfaces of the execution stage**

| Interface | Capability | Applicable API | Producer | Consumer |
|---|---|---|---|---|
| Control interface | Configure behavior characteristics of the execution | Generic Provisioning Management service | execution stage | operator-configures the execution attributes |
| | Configure the stage with a Performance Management (PM) job to deliver PM data to the operator through the E interface | Generic Provisioning Management service | execution stage | Operator - configures the PM job on the execution stage |
| | Configure the stage to implement provisioning management to execute actions on the network through the X interface | Generic Provisioning Management service | execution stage | operator - configures the data collection job on the execution stage |
| Exposure interface | Provide information to the operator about the performance of the execution stage | - file data reporting; or | execution stage | operator |
| | | - Streaming data reporting | | |
| data collection | The stage configures a data collection job on the decision stage to get the recommended actions from the decision stage | Generic Provisioning Management service | decision stage | execution stage - configures the data collection job on the decision stage |
| | Receive recommended actions | - file data reporting; or | decision stage | execution stage - |
| | | - Streaming data reporting | | |
| | | Generic Provisioning Management service | Execution stage | decision stage - configures the Execution stage with the recommended actions |
| Execution interface | Execute the recommended actions to the Network or its resource(s) | Generic Provisioning Management service | Network (or its resource) | Network resources |

The above-described procedures and functions may be implemented by respective functional elements, processors, or the like, as described below.

In the foregoing exemplary description of the network entity, only the units that are relevant for understanding the principles of the disclosure have been described using functional blocks. The network entity may comprise further units that are necessary for its respective operation. However, a description of these units is omitted in this specification. The arrangement of the functional blocks of the devices is not construed to limit the disclosure, and the functions may be performed by one block or further split into sub-blocks.

When in the foregoing description it is stated that the apparatus, i.e. network entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

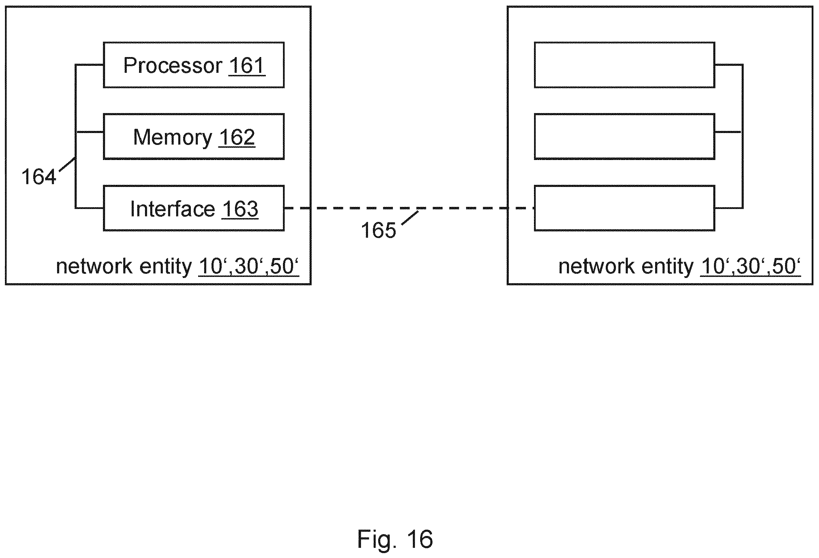

In Figure 16, an alternative illustration of apparatuses according to example embodiments is depicted. As indicated in Figure 16, according to example embodiments, the apparatus (network node or entity) 10' (corresponding to the network node or entity 10) comprises a processor 161, a memory 162 and an interface 163, which are connected by a bus 164 or the like. Further, according to example embodiments, the apparatus (network node or entity) 30' (corresponding to the network node or entity 30) comprises a processor 161, a memory 162 and an interface 163, which are connected by a bus 164 or the like. Further, according to example embodiments, the apparatus (network node or entity) 50' (corresponding to the network node or entity 50) comprises a processor 161, a memory 162 and an interface 163, which are connected by a bus 164 or the like. The apparatuses 10', 30', 50' may be connected via link 165 to another one of the apparatuses 10', 30', 50', respectively.

The processor 161 and/or the interface 163 may also include a modem or the like to facilitate communication over a (hardwire or wireless) link, respectively. The interface 163 may include a suitable transceiver coupled to one or more antennas or communication means for (hardwire or wireless) communications with the linked or connected device(s), respectively. The interface 163 is generally configured to communicate with at least one other apparatus, i.e. the interface thereof.

The memory 162 may store respective programs assumed to include program instructions or computer program code that, when executed by the respective processor, enables the respective electronic device or apparatus to operate in accordance with the example embodiments.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to example embodiments, an apparatus representing the network node or entity (implementing a composer/management entity) 10 comprises at least one processor 161, at least one memory 162 including computer program code, and at least one interface 163 configured for communication with at least another apparatus. The processor (i.e. the at least one processor 161, with the at least one memory 162 and the computer program code) is configured to perform transmitting a request for a first closed loop stage profile (thus the apparatus comprising corresponding means for transmitting), to perform receiving said first closed loop stage profile indicative of capabilities and characteristics of a first closed loop stage (thus the apparatus comprising corresponding means for receiving), to perform analyzing said first closed loop stage profile (thus the apparatus comprising corresponding means for analyzing), and to perform deciding on application of said first closed loop stage based on said first closed loop stage profile (thus the apparatus comprising corresponding means for deciding).

According to example embodiments, an apparatus representing the network node or entity (implementing a closed loop stage entity) 30 comprises at least one processor 161, at least one memory 162 including computer program code, and at least one interface 163 configured for communication with at least another apparatus. The processor (i.e. the at least one processor 161, with the at least one memory 162 and the computer program code) is configured to perform receiving a request for a closed loop stage profile of said closed loop stage (thus the apparatus comprising corresponding means for receiving), and to perform transmitting said closed loop stage profile indicative of capabilities and characteristics of said closed loop stage (thus the apparatus comprising corresponding means for transmitting).

According to example embodiments, an apparatus representing the network node or entity (implementing an automation platform entity) 50 comprises at least one processor 161, at least one memory 162 including computer program code, and at least one interface 163 configured for communication with at least another apparatus. The processor (i.e. the at least one processor 161, with the at least one memory 162 and the computer program code) is configured to perform receiving a request for a closed loop stage profile, said request for said closed loop stage profile including closed loop stage filter information (thus the apparatus comprising corresponding means for receiving), to perform processing said closed loop stage filter information to identify a first closed loop stage of said plurality of closed loop stages, said first closed loop stage matching said closed loop stage filter information (thus the apparatus comprising corresponding means for processing), to perform transmitting, towards said first closed loop stage, a request for a first closed loop stage profile (thus the apparatus comprising corresponding means for transmitting), to perform receiving, from said first closed loop stage, said first closed loop stage profile indicative of capabilities and characteristics of a first closed loop stage, and to perform transmitting said first closed loop stage profile.

For further details regarding the operability/functionality of the individual apparatuses, reference is made to the above description in connection with any one of Figures 1 to 15, respectively.

For the purpose of the present disclosure as described herein above, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present disclosure. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present disclosure also covers any conceivable combination of method steps and operations described above, and any conceivable combination of nodes, apparatuses, modules or elements described above, as long as the above-described concepts of methodology and structural arrangement are applicable.

In view of the above, there are provided measures for composition of closed loops from closed loop stages. Such measures exemplarily comprise, at of a network entity composing a closed loop from a plurality of closed loop stages, transmitting a request for a first closed loop stage profile, receiving said first closed loop stage profile indicative of capabilities and characteristics of a first closed loop stage, analyzing said first closed loop stage profile, and deciding on application of said first closed loop stage based on said first closed loop stage profile.

Even though the disclosure is described above with reference to the examples according to the accompanying drawings, it is to be understood that the disclosure is not restricted thereto. Rather, it is apparent to those skilled in the art that the present disclosure can be modified in many ways without departing from the scope of the invention as disclosed herein.

### List of acronyms and abbreviations

- 3GPP: Third Generation Partnership Project
- 5G: Fifth Generation
- API: application programming interface
- CL: closed loop
- CL: MnF closed loop management function
- CL: closed loop
- CRUD: Create, Read, Update and Delete
- DC: data collection
- IOC: information object class
- MnS: Management Services
- NRM: Network Resource Management
- PM: Performance Management
- SDK: software development kit
- SNMP: simple network management protocol
- UML: unified modeling language

## Claims

1. An apparatus of a network entity for composing a closed loop from a plurality of closed loop stages in closed loop automation, the apparatus comprising
transmitting circuitry (11) configured to transmit a request for a first closed loop stage profile,
receiving circuitry (12) configured to receive said first closed loop stage profile indicative of capabilities and characteristics of a first closed loop stage, wherein said first closed loop stage profile includes information on a type and/or capabilities of said first closed loop stage, information on an input interface of said first closed loop stage, and information on an output interface of said first closed loop stage,
analyzing circuitry (13) configured to analyze said first closed loop stage profile,
deciding circuitry (14) configured to decide on application of said first closed loop stage based on said first closed loop stage profile,
transmitting circuitry (11) further configured to transmit a request for a second closed loop stage profile,
receiving circuitry (12) further configured to receive said second closed loop stage profile indicative of capabilities and characteristics of a second closed loop stage, wherein said second closed loop stage profile includes information on a type and/or capabilities of said second closed loop stage, information on an input interface of said second closed loop stage, and information on an output interface of said second closed loop stage,
analyzing circuitry (13) further configured to analyze said second closed loop stage profile,
deciding circuitry (14) further configured to decide on application of said second closed loop stage based on said second closed loop stage profile, and
determining circuitry (23) configured to determine, for said closed loop, a set of closed loop stages including said first closed loop stage and said second closed loop stage,
wherein said first closed loop stage is one of a data collection entity, an analysis entity, a decision entity, and an execution entity, or any combination of said data collection entity, said analysis entity, said decision entity, and said execution entity, and/or
said second closed loop stage is one of a data collection entity, an analysis entity, a decision entity, and an execution entity, or any combination of said data collection entity, said analysis entity, said decision entity, and said execution entity.

2. The apparatus according to claim 1, further comprising
matching circuitry (21) configured to match said first closed loop stage profile with requirements in relation to said closed loop.

3. The apparatus according to claim 2, further comprising
selecting circuitry (22) configured to select said first closed loop stage for a first function in said closed loop, if said first closed loop stage profile matches with said requirements in relation to said first function in said closed loop.

4. The apparatus according to claim 1, further comprising
creating circuitry (24) configured to create a configuration for each of said closed loop stages of said set of closed loop stages based on said requirements in relation to said closed loop.

5. The apparatus according to claim 4, further comprising
transmitting circuitry (11) configured to transmit, to each of said closed loop stages of said set of closed loop stages, said respective configuration.

## Patentansprüche

1. Vorrichtung einer Netzwerkentität zum Zusammensetzen einer geschlossenen Schleife aus einer Vielzahl von geschlossenen Schleifenstufen mit einer geschlossenen Schleifenautomatisierung, wobei die Vorrichtung Folgendes umfasst
eine Übertragungsschaltung (11), die dazu ausgelegt ist, eine Anforderung eines ersten geschlossenen Schleifenstufenprofils zu übertragen,
eine Empfangsschaltung (12), die dazu ausgelegt ist, das erste geschlossene Schleifenstufenprofil zu empfangen, das Fähigkeiten und Eigenschaften einer ersten geschlossenen Schleifenstufe anzeigt, wobei das erste geschlossene Schleifenstufenprofil Informationen über einen Typ und/oder Fähigkeiten der ersten geschlossenen Schleifenstufe, Informationen über eine Eingabeschnittstelle der ersten geschlossenen Schleifenstufe und Informationen über eine Ausgabeschnittstelle der ersten geschlossenen Schleifenstufe beinhaltet,
eine Analyseschaltung (13), die dazu ausgelegt ist, das erste geschlossene Schleifenstufenprofil zu analysieren,
eine Beschließungsschaltung (14), die dazu ausgelegt ist, eine Anwendung der ersten geschlossenen Schleifenstufe auf Basis des ersten geschlossenen Schleifenstufenprofils zu beschließen,
eine Übertragungsschaltung (11), die ferner dazu ausgelegt ist, eine Anforderung eines zweiten geschlossenen Schleifenstufenprofils zu übertragen,
eine Empfangsschaltung (12), die ferner dazu ausgelegt ist, das zweite geschlossene Schleifenstufenprofil zu empfangen, das Fähigkeiten und Eigenschaften einer zweiten geschlossenen Schleifenstufe anzeigt, wobei das zweite geschlossene Schleifenstufenprofil Informationen über einen Typ und/oder Fähigkeiten der zweiten geschlossenen Schleifenstufe, Informationen über eine Eingabeschnittstelle der zweiten geschlossenen Schleifenstufe und Informationen über eine Ausgabeschnittstelle der zweiten geschlossenen Schleifenstufe beinhaltet,
eine Analyseschaltung (13), die ferner dazu ausgelegt ist, das zweite geschlossene Schleifenstufenprofil zu analysieren,
eine Beschließungsschaltung (14), die ferner dazu ausgelegt ist, eine Anwendung der zweiten geschlossenen Schleifenstufe auf Basis des zweiten geschlossenen Schleifenstufenprofils zu beschließen, und
eine Bestimmungsschaltung (23), die dazu ausgelegt ist, einen Satz von geschlossenen Schleifenstufen, der die erste geschlossene Schleifenstufe und die zweite geschlossene Schleifenstufe beinhaltet, für die geschlossene Schleife zu bestimmen,
wobei die erste geschlossene Schleifenstufe eines von einer Datensammlungsentität, einer Analyseentität, einer Beschließungsentität und einer Ausführungsentität oder einer Kombination der Datensammlungsentität, der Analyseentität, der Beschließungsentität und der Ausführungsentität ist, und/oder
die zweite geschlossene Schleifenstufe ist eines von einer Datensammlungsentität, einer Analyseentität, einer Beschließungsentität und einer Ausführungsentität oder einer Kombination der Datensammlungsentität, der Analyseentität, der Beschließungsentität und der Ausführungsentität.

2. Vorrichtung nach Anspruch 1, die ferner Folgendes umfasst
eine Abgleichschaltung (21), die dazu ausgelegt ist, das erste geschlossene Schleifenstufenprofil mit Anforderungen mit Bezug auf die geschlossene Schleife abzugleichen.

3. Vorrichtung nach Anspruch 2, die ferner Folgendes umfasst
eine Auswahlschaltung (22), die dazu ausgelegt ist, die erste geschlossene Schleife für eine erste Funktion der geschlossenen Schleife auszuwählen, wenn das erste geschlossene Schleifenstufenprofil mit den Anforderungen mit Bezug auf die erste Funktion der geschlossenen Schleife übereinstimmt.

4. Vorrichtung nach Anspruch 1, die ferner Folgendes umfasst
eine Erstellungsschaltung (24), die dazu ausgelegt ist, für jede der geschlossenen Schleifenstufen des Satzes von geschlossenen Schleifenstufen auf Basis der Anforderungen mit Bezug auf die geschlossene Schleife eine Auslegung zu erstellen.

5. Vorrichtung nach Anspruch 4, die ferner Folgendes umfasst
eine Übertragungsschaltung (11), die dazu ausgelegt ist, die jeweilige Auslegung zu jeder der geschlossenen Schleifenstufen des Satzes von geschlossenen Schleifenstufen zu übertragen.

## Revendications

1. Appareil d'une entité de réseau pour composer une boucle fermée à partir d'une pluralité d'étages de boucle fermée au cours d'une automatisation en boucle fermée, l'appareil comprenant
une circuiterie d'émission (11) configurée pour émettre une demande pour un premier profil d'étage de boucle fermée,
une circuiterie de réception (12) configurée pour recevoir ledit premier profil d'étage de boucle fermée indiquant les capacités et les caractéristiques d'un premier étage de boucle fermée, dans lequel ledit premier profil d'étage de boucle fermée comporte des informations sur un type et/ou des capacités dudit premier étage de boucle fermée, des informations sur une interface d'entrée dudit premier étage de boucle fermée, et des informations sur une interface de sortie dudit premier étage de boucle fermée,
une circuiterie d'analyse (13) configurée pour analyser ledit premier profil d'étage de boucle fermée,
une circuiterie de décision (14) configurée pour décider de l'application dudit premier étage de boucle fermée sur la base dudit premier profil d'étage de boucle fermée,
une circuiterie d'émission (11) configurée en outre pour émettre une demande pour un deuxième profil d'étage de boucle fermée,
une circuiterie de réception (12) configurée en outre pour recevoir ledit deuxième profil d'étage de boucle fermée indiquant les capacités et les caractéristiques d'un deuxième étage de boucle fermée, dans lequel ledit deuxième profil d'étage de boucle fermée comporte des informations sur un type et/ou des capacités dudit deuxième étage de boucle fermée, des informations sur une interface d'entrée dudit deuxième étage de boucle fermée, et des informations sur une interface de sortie dudit deuxième étage de boucle fermée,
une circuiterie d'analyse (13) configurée en outre pour analyser ledit deuxième profil d'étage de boucle fermée,
une circuiterie de décision (14) configurée en outre pour décider de l'application dudit deuxième étage de boucle fermée sur la base dudit deuxième profil d'étage de boucle fermée, et
une circuiterie de détermination (23) configurée pour déterminer, pour ladite boucle fermée, un ensemble d'étages de boucle fermée comportant ledit premier étage de boucle fermée et ledit deuxième étage de boucle fermée.
dans lequel ledit premier étage de boucle fermée est un parmi une entité de collecte de données, une entité d'analyse, une entité de décision, et une entité d'exécution, ou toute combinaison de ladite entité de collecte de données, de ladite entité d'analyse, de ladite entité de décision, et de ladite entité d'exécution, et/ou
ledit deuxième étage de boucle fermée est un parmi une entité de collecte de données, une entité d'analyse, une entité de décision, et une entité d'exécution, ou toute combinaison de ladite entité de collecte de données, de ladite entité d'analyse, de ladite entité de décision, et de ladite entité d'exécution.

2. Appareil selon la revendication 1, comprenant en outre
une circuiterie d'adaptation (21) configurée pour adapter ledit premier profil d'étage de boucle fermée aux exigences relatives à ladite boucle fermée.

3. Appareil selon la revendication 2, comprenant en outre
une circuiterie de sélection (22) configurée pour sélectionner ledit premier étage de boucle fermée pour une première fonction dans ladite boucle fermée, si ledit premier profil d'étage de boucle fermée est adapté auxdites exigences relatives à ladite première fonction dans ladite boucle fermée.

4. Appareil selon la revendication 1, comprenant en outre
une circuiterie de création (24) configurée pour créer une configuration pour chacun desdits étages de boucle fermée dudit ensemble d'étages de boucle fermée sur la base desdites exigences relatives à ladite boucle fermée.

5. Appareil selon la revendication 4, comprenant en outre
une circuiterie d'émission (11) configurée pour émettre, vers chacun desdits étages de boucle fermée dudit ensemble d'étages de boucle fermée, ladite configuration respective.
